# EUROPEAN PATENT SPECIFICATION

(11) **EP 3 176 196 B1**
(45) Date of publication and mention of the grant of the patent: **29.08.2018**
(21) Application number: 16201943.4
(22) Date of filing: 02.12.2016
(51) Int. Cl.: C08G 18/48, C08G 18/72, C08G 18/76, C08G 18/78, C08G 18/79, C08G 18/10, C09J 175/08

(54) **ONE-COMPONENT SOLVENT-FREE POLYURETHANE LAMINATION ADHESIVES**
EINKOMPONENTIGE, LÖSUNGSMITTELFREIE POLYURETHANKASCHIERKLEBSTOFFE
ADHÉSIFS DE STRATIFICATION POLYURÉTHANE MONOCOMPOSANT SANS SOLVANT

(30) Priority: 04.12.2015 IT UB20156312
(43) Date of publication of application: 07.06.2017
(73) Proprietor: Societa' Azionaria per l'Industria Chimica Italiana S.A.P.I.C.I. SPA, 20123 Milano (IT)
(72) Inventor: CHIAPPA, Cristian, 20063 CERNUSCO SUL NAVIGLIO (MI) (IT); NERI MARI, Matteo, 20063 CERNUSCO SUL NAVIGLIO (MI) (IT); BORLENGHI, Attilio, 20063 CERNUSCO SUL NAVIGLIO (MI) (IT); FASANO, Francesca, 20063 CERNUSCO SUL NAVIGLIO (MI) (IT); PERITI, Corrado, 20063 CERNUSCO SUL NAVIGLIO (MI) (IT); FURIOSI, Cristian, 20063 CERNUSCO SUL NAVIGLIO (MI) (IT)
(74) Representative: Bianchetti Bracco Minoja S.r.l.

(56) References cited:
- EP-A1- 1 241 197
- DE-A1-102008 039 679
- US-A1- 2003 050 423
- US-A1- 2004 084 138

## Description

The present invention relates to one-component solvent-free polyurethane lamination adhesives having a low viscosity at room temperature, which can be applied in thin layers to large areas of substrate, with characteristics of stability, good initial adhesion to substrates, and a rapid increase in adhesion.

The polyurethane adhesives according to the invention are particularly suitable for flexible packaging, and have a low isocyanate monomer content, typically under 0.1% by weight.

### Prior art

The manufacture of multi-ply laminates for the packaging industry is becoming increasingly important, as it is possible to create laminates with customised characteristics using a combination of different plastic films (different thicknesses and different chemical and/or structural characteristics).

Polyurethanes are the preferred adhesives, because they ensure that the plastic substrates adhere well to one another, are odourless and, due to their transparency, allow the packaged goods to be clearly seen. Adhesive systems based on prepolymers containing reactive terminal groups are therefore commonly used in the manufacture of composites, especially multi-ply laminates for flexible packaging designed for the food packaging industry.

Reactive polyurethanes have reactive terminal groups which can react with water or other compounds having acid hydrogen atoms. As a result of this characteristic, the reactive polyurethane can be applied in the desired position in a processable form (generally from liquid to highly viscous liquid), and can be crosslinked by adding water or other compounds having acid hydrogen atoms (in which latter case they are called "hardeners").

In two-component (2K or 2-pack) systems, the hardener is usually added before application, normally using a mixing or metering system; once the hardener has been added, the processability time is limited.

However, polyurethanes can be crosslinked with reactive groups without the use of a hardener, simply by reaction with atmospheric moisture (1K or 1-pack). These systems have the advantage for the user of eliminating difficult mixing of often viscous ingredients before application, reducing investments in machinery, and limiting errors at the metering and mixing stage.

The polyurethanes with reactive terminal groups generally used in 1K and 2K systems include, for example, polyurethanes with terminal isocyanate (NCO) groups.

Solvent-free lamination adhesives, comprising 100% dry matter, do not contain organic solvents or water, and have the advantage of being usable at higher line speeds than those containing solvents. The application rate of lamination adhesives containing solvent or water is limited, because the solvents must be removed by evaporation in an oven along the lamination line.

The usual practice is to obtain polyurethanes with NCO terminal groups by reacting polyfunctional alcohols with an excess of polyisocyanate monomers, generally diisocyanates.

It is known that by operating in this way, a certain quantity of diisocyanate monomers used in stoichiometric excess remains present in the reaction mixture at the end of the reaction, regardless of the reaction time.

Even at room temperature, diisocyanates such as HDI, IPDI, TDI and MDI have a significant vapor pressure which gives rise to serious health problems at the application stage, as they are toxic due to their sensitising and irritant action. The user is therefore required by law to take specific measures to protect personnel during application, and this involves significant additional costs, such as measures designed to keep the air breathable, or to maintain said substances below the maximum concentrations allowed in the workplace.

Some of the polyurethane adhesives already known in the prior art contain more than 0.1% (the threshold prescribed by the CLP Regulation, below which the product is not considered hazardous) by weight of monomer (usually volatile diisocyanates, such as free TDI, MDI or other isocyanate monomers); the user is therefore required to install expensive protection apparatus for personnel exposed to product vapors or the aerosol developed by the dynamic application conditions on rotary machines. Systems of this kind are regulated by the hazardous substances legislation, and are required to be labelled as hazardous materials. The labelling obligation is accompanied by the requirement to take special packaging and transport measures.

US 2003/050423 describes a polyurethane lamination adhesive with a low content of "readily volatile" monomers with isocyanate functional groups.

"Readily volatile" refers to substances with a vapor pressure at about 30°C greater than 0.0007 mmHg, or a boiling point of less than 190°C.

Bicyclic diisocyanates like methylene diphenyl diisocyanate (MDI) are considered as low-volatility isocyanates.

The low viscosity of the adhesive described in US 2003/050423 is therefore obtained by preparing a prepolymer with a very low content of TDI (readily-volatile) monomer, but high quantities of MDI (low-volatility) monomer which is used as reactive solvent. Said system does not solve the problems relating to possible migration of undesirable substances into the packaging.

The polyurethane prepolymers already known are not completely free of migration. The concept of migration comprises the movement of low-molecular-weight compounds from polyurethane prepolymers or systems based on polyurethane prepolymers to the surrounding environment. In addition to the risks for operators, with regard to the use of the products as food packaging adhesives, the presence of diisocyanate monomers in packaging, due to migration through plastic films and reaction with the moisture present in foodstuffs, produces potential pollution by substances suspected of being carcinogenic (primary aromatic amines).

The main components that migrate are diisocyanate monomers, which are generally more volatile (vapor pressure higher than 0.0007 mmHg at 30°C or boiling point lower than 190°C). Moreover, the potential migration of said substances creates a number of safety problems, which impose a series of limitations on food packaging manufacturers, including long storage times of the materials before they are allowed to come into contact with food, and limitations on the shelf life of foods after packaging.

The migration of potentially carcinogenic substances obviously constitutes a serious problem in the packaging industry, especially for the food packaging , and there is great demand for solutions that solve these problems.

There is consequently a trend in the sector to use polyurethane adhesives which, as far as possible, do not contain monomers such as free MDI and/or TDI. Moreover, they should not contain volatile or migratory substances, or release such substances into the surrounding environment.

Another requirement is that polyurethane adhesives must present good initial adhesion immediately after the lamination of the plastic film; an adhesive bond of this type must also possess a sufficient degree of flexibility to withstand the various traction and elongation loads to which the laminate is generally subjected during manufacture.

Polyurethane-based prepolymers generally have very high viscosity values, which fall outside the application ranges; the viscosity of the polyurethane prepolymer can therefore be reduced by adding an excess of mono- or multifunctional monomers, such as polyisocyanate monomer (reactive diluent). On the other hand, the incomplete reaction of the reactive diluent and, in theory, the presence of unreacted starting polyisocyanate monomer, often leads to the presence in the bond of free polyisocyanate monomers which can migrate ("migrants"), even into bonded materials.

As a result of contact with moisture (H₂O), the isocyanate groups of the migrant react to form primary aromatic amines, which are undesirable because they are believed to be carcinogenic (PAA: R-N=C=O + H₂O → R-NH₂ + CO₂).

Migration and secondary reactions are undesirable in the food packaging industry, because if the migrant passes through the packaging, it can contaminate the packaged food; moreover, long waiting times are required before the packaging can be classed as "migration-free" and used.

To prevent food contamination, the laminate must be "migration-free". The amine content, especially the primary aromatic amine content, must be below the detection limit of the analysis method used.

The most commonly used method is the colorimetric method, based on measuring the absorption at a given wavelength of a nitrogenous compound obtained by the specific reaction described in the BGVV method (Bundesinstitut für gesundheitlichen Verbraucherschutz und Veterinärmedizin, BGVV, nach Amtlicher Sammlung von Untersuchungsverfahren nach § 35 LMBG-Untersuchung primären von Lebensmitteln Bestimmung von aromatischen Aminen in wässrigen Prüflebensmitteln).

In the majority of solvent-free adhesives used in food packaging, which are formulated with an excess of free MDI and with free isocyanate monomer >1% (by weight), the primary aromatic amines re-form during the shelf life of the laminate (a process known as "PAA re-forming").

In practice, during the lifetime of the foodstuff, there is a breakdown reaction of the polyurethane polymer of conventional adhesives, which leads to the formation of oligomeric fragments containing primary aromatic amines. This behavior causes many limitations on the shelf life of packaging made with conventional polyurethane adhesives.

US2004/084138 discloses a one-component adhesive which is basically free of migration by primary aromatic amines. All the preparations described must contain a mandatory component (B) that contains at least one, and preferably two, functional groups able to polymerize in the presence of UV light; said composition is therefore considered non-optional for the purpose of the invention.

Component (B) is considered non-optional (paragraphs 130-136).

The lamination process described in paragraph 142 proves that the adhesive system requires a mandatory step with exposure to UV or electron beam light, and therefore requires the use of lamination machinery different from that used according to the present invention.

It is also clearly stated that the 1-K reactive adhesive requires the addition of components (B) and (C).

Another undesirable effect which can be caused by migration of polyisocyanate monomers is the "antisealing" effect in the manufacture of multi-ply plastic film bags. Polyolefin plastic films often contain a glidant based on fatty acid amides (such as oleamides). By reacting migrated polyisocyanate monomer with fatty acid amide and/or moisture, ureas with a melting point above the sealing temperature of the plastic film are formed on the substrate. This leads to the formation of a "foreign" (antisealing) layer between the films to be sealed which counteracts the formation of a homogenous seal.

However, problems are caused not only by the use, but also the marketing, of reactive adhesives containing polyisocyanate monomer, as substances and preparations containing, for example, more than 0.1% of free TDI are covered by the hazardous materials legislation and must therefore be identified in the label. The obligation in this respect relates to special packaging and transport measures. The use of polyurethane adhesives is not problem-free, because diisocyanate monomers are toxic, irritant and sensitising. This means that during the manufacture of polyurethane compositions, it is essential to ensure that the maximum allowable concentration of isocyanates, which depends on their vapor pressures, is not exceeded. The MAK Commission (the German Commission for the Investigation of Health Hazards of Chemical Compounds in the Work Area) has also classified various isocyanate monomers under category 3 "Substances justifiably suspected of having carcinogenic potential" in Section III (Carcinogenic Chemicals in the Work Area) of the MAK list.

Conversely, if the diisocyanate monomer content of the adhesive is very low (<0.1% by weight), hazard labelling may not be compulsory.

One of the possible ways of producing reactive polyurethanes with a low content of free diisocyanate monomer is by reacting a diol component with a stoichiometric excess of diisocyanate monomer to form a prepolymer, and subsequently remove the unreacted diisocyanate monomer by distillation.

This procedure has been the state of the art for decades. For example, EP 1241197, DE 4232 015, DE 4140660, DE 3739261 and WO 2001/040342 describe the manufacture of prepolymers with isocyanate functional groups having a low residual monomer content using one or more thin-film evaporators and/or short-path evaporators.

One of the possible ways of producing prepolymers with a low monomer content is to use those commonly called asymmetrical diisocyanates, namely diisocyanates which have NCO groups with different reactivities.

For example, NCO-terminated prepolymers with a free diisocyanate monomer content are described in WO 1993/009158, US 2008/0306176, WO 2003/006521, WO 2003/051951 and US 2014/0364527.

As will be seen from the examples submitted, various products have low diisocyanate monomer contents (in some cases <0.1%), but due to the low NCO/OH ratio needed to obtain these values, the final viscosity of said prepolymers is considerably higher than that of the analogous prepolymers obtained by using higher NCO/OH ratios, following removal of the free monomer by distillation or extraction with a non-solvent for the prepolymer. There are also various limitations on the maximum NCO terminal group content that can be obtained with said prepolymers, as the use of low NCO/OH ratios entails a lower final content of NCO groups.

The most common PU adhesives for flexible packaging on the market use TDI or MDI as diisocyanate monomer.

One of the typical problems of conventional adhesives is the characteristic odor originating from the adhesive which is transferred to the food packaging. The process of stripping the free monomer aids the formation of a prepolymer which is practically free of volatile ingredients, and therefore odourless.

Conventional polyurethane adhesives, based on the reaction between an isocyanate prepolymer and a polyester, typically having the characteristic of containing cyclic esters, deriving from the production process of polyesters and so present first in the adhesive and subsequently in the packaging, as inevitable impurities. Said impurities are not listed in Regulation 10/2011/EC, which governs materials intended to come into contact with food, and therefore require expensive, complicated risk assessments and toxicological evaluations.

### Description of the invention

The present invention provides a one-component solvent-free lamination adhesive, characterized by low viscosity at room temperature and suitable for application in thin layers to large areas of substrate. The adhesive exhibits good initial adhesion to the substrates and a rapid increase in adhesion. The layer of adhesive contains the minimum possible amount of "physiologically undesirable" ingredients such as aromatic amines and cyclic esters. Moreover, the adhesive is stable under normal storage conditions.

The primary aromatic amine (PAA) content in the adhesive according to the invention is below the detection limit of the analysis method immediately after manufacture of the packaging. Moreover, unlike conventional products, there are no limitations on the shelf life of the packaged product due to breakdown of the polymer, according to Regulation 10/2011/EC governing materials intended to come into contact with food.

The invention therefore relates to a 1K solvent-free reactive polyurethane lamination adhesive having isocyanate-reactive terminal groups, with a low content of free diisocyanate monomer. "Low diisocyanate monomer content" herein means an initial diisocyanate monomer concentration lower than 0.1%. The fraction by weight of the diisocyanate monomer is determined by GC, HPLC or GPC.

The polyurethane adhesive according to the invention, characterized by a viscosity at 40°C ranging from 800 mPas to 20000 mPas, preferably from 1000 mPas to 10000 mPas, most preferably from 2000 mPas to 7000 mPas, is obtained by a process comprising:
A) reacting a diisocyanate with a mixture of polyols consisting of 50-90% polyethylene glycols having a molecular weight of less than 600 g/mol and 10-50% w/w of polypropylene glycols having a molecular weight <5000 g/mol in an NCO/OH ratio greater than 2.5, optionally using a catalyst and optionally using an acid compound to obtain an NCO-terminated prepolymer;
B) subjecting the NCO-terminated prepolymer obtained at stage A) to one or more stripping stages using a series of one or more thin-layer evaporators and short-path evaporators.

Stage A is effected according to known procedures and operating conditions.

Isocyanates suitable for preparation of the NCO-terminated prepolymer comprise toluene diisocyanate (TDI) and isomeric mixtures thereof, diphenyl methane diisocyanate (MDI) and isomeric mixtures thereof, 1,5-naphthalene diisocyanate (NDI), tetramethyl xylylene diisocyanate (TMXDI), isophorone diisocyanate (IPDI) and isomeric mixtures thereof, 1,6-hexane diisocyanate (HDI), xylylene diisocyanate (XDI), methane dicyclohexyl diisocyanate and isomeric mixtures thereof.

In particular the most suitable diisocyanate monomers are aromatic diisocyanate monomers, which are preferred for their greater reactivity and lower market cost, such as toluene diisocyanate (TDI) and isomeric mixtures thereof, diphenyl methane diisocyanate (MDI) and isomeric mixtures thereof, and 1,5-naphthalene diisocyanate (NDI).

Suitable polyols are polyether polyols, polyester polyols and polyether-polyester polyols with 2 to 3 hydroxyl functional groups and a molecular weight ranging from 200 to 5000, preferably from 200 to 2000, most preferably from 200 to 1000.

Component B preferably consists of a mixture of polyether polyols obtained by polymerization of ethylene oxide and/or propylene oxide. In particular, polyethylene glycols (PEG), polypropylene glycols (PPG) and random or block ethylene oxide/propylene oxide copolymers with molecular weights <2000 g/mol are suitable.

Under the reaction condition described, the lower the average molecular weight of the polyols used, the higher the value of the reactive NCO groups present in the final prepolymer. This index is very important, because it determines the reactivity of the prepolymer and therefore the crosslinking rate of the final adhesive system, since the higher the % of NCO, the greater the reactivity. Equally, it is known that by using liquid polyols (i.e. polyols that do not present crystallinity at room T) with 2 functional groups, the final viscosity of the NCO-terminated prepolymer obtained by using an NCO/OH ratio >2.5 and subsequently removing the free monomer by distillation is inversely proportional to the average molecular weight of the polyols used (at least in the range of interest according to the invention for polyols ranging from 200 to 4000 g/mol), due to the higher content of urethane groups present which generate Van der Waals interactions and hydrogen bridges between the polymer molecules. In particular, polyurethane prepolymers obtained by reacting TDI with polypropylene glycols having a MW of 400 g/mol, after removal of the unreacted diisocyanate by distillation have a viscosity of 30000 mPas at 40°C and %NCO=9.5%, whereas the analogues obtained from PPG with a MW of 2000 g/mol have a viscosity of 4000 mPas at 40°C and %NCO=3.5%.

Polyethylene glycols with MW>600 are solid at room T because the polymer chains form self-aligned crystalline domains, whereas polypropylene glycols are liquid even at molecular weights >8000 g/mol. NCO-terminated polyurethane prepolymers prepared according to the invention, obtained from polyethylene glycols with a MW > 1000 g/mol, are solid at room T for the same reason. However, NCO-terminated polyurethane prepolymers obtained from polyethylene glycols with a MW <600 g/mol are less viscous than those obtained from polypropylene glycols; for example, a polyurethane prepolymer obtained by reacting TDI with PEG having a MW of 400 g/mol, after removal of the unreacted diisocyanate by distillation has a viscosity of 5000 mPas at 40°C and %NCO=10.5%.

Polyether polyols obtained from EO are strongly hygroscopic and hydrophilic, and even temporarily soluble in water (once in the water, the material reacts to form an insoluble polyurea), whereas polyether polyols obtained from PO are hydrophobic; the corresponding NCO-terminated prepolymers possess similar characteristics. The crosslinking rate in 1K systems with isocyanate-reactive groups depends on the reaction rate between the NCO groups and water which, in non-mixed viscous systems, is controlled not only by the thermodynamic reactivity of the NCO group with water, but also by the diffusion rate of water in the polymer matrix. The diffusion rate of water in the polymer matrix is therefore greater in hydrophilic than hydrophobic systems. Moreover, highly hydrophilic systems present the drawback of being highly sensitive to atmospheric moisture, which therefore affects the mechanical properties of the adhesive system. The prepolymers obtained from fully-crosslinked PO polyethers are more flexible, whereas prepolymers obtained from EO polyethers are more rigid, and therefore less suitable for use as adhesive systems for flexible packaging.

Balancing of all these properties allows the preparation of a reactive, NCO-terminated, solvent-free polyurethane adhesive with a high content of isocyanate-reactive groups, low viscosity, excellent initial adhesion on various substrates, and a good crosslinking rate if used as 1K without the use of catalysts.

It has been found that the ideal mixture in order to maximize all the characteristics is obtained by using a mixture consisting of:
50-90% PEG with MW < 600
10-50% PPG with MW <5000

A random or block EO/PO copolymer, with EO/PO ratios that balance the characteristics obtained by mixing PO and EO homopolymers, can be used in combination with the preceding polyols.

The final prepolymer thus obtained has the following characteristics after removal of the free monomer:
%NCO> 8%
Vx@40°C< 10000 mPas
% free diisocyanate monomer<0.1%

The prepolymer can be used "as is" or after addition of additives such as adhesion promoters, viscosity and rheology regulators, water scavengers, anti-skinning agents, anti-bubbling agents, etc.

In particular the use of an adhesion promoter, included among silanes containing groups that react with isocyanate groups (such as 3-aminopropyltriethoxysilane), is preferable when the adhesive system is to be used on metal or metallized substrates such as aluminum.

The adhesive can also be formulated with the addition of low-viscosity polyisocyanates such as isocyanate HDI trimers (e.g. POLURENE MT100, POLURENE MT100LV and POLURENE MT100LLV) and HDI allophanates, to reduce the viscosity of the final system.

Polyether polyols are produced by polymerization reaction, with opening of the respective oxide rings, using strongly basic catalysts such as KOH or metal cyanides. If the residual alkali or alkaline-earth metal content in the polyol is high, this can give rise to secondary reactions of the NCO group such as isocyanuration. To prevent this phenomenon, an inhibitor like a protic acid can be used, such as hydrochloric acid, phosphoric acid, acid phosphates such as dibutyl acid phosphate and dioctyl acid phosphate, and acid chlorides such as benzoyl chloride, or methylating agents such as methyl p-toluenesulphonate.

If desired, the urethane formation reaction can be accelerated by adding suitable catalysts during preparation stage.

Catalysts suitable for the urethanization reaction are known, and comprise amines and organometallic compounds.

Examples of catalysts are triethylamine, tributylamine, dimethylbenzylamine, dicyclohexylmethylamine, dimethylcyclohexylamine, N,N,N',N-tetra-methyldiamine methyl ether, bis(dimethylaminopropyl)urea, N-methyl or N-ethyl morpholine, N,N'-dimorpholinodiethyl ether (DMDEE), N-cyclohexylmorpholine, N,N,N',N'-tetramethylethylenediamine, N,N,N',N'-tetramethylbutylenediamine, N,N,N',N'-tetramethyl-1,6-hexanediamine, pentamethyldiethylenetriamine, dimethylpiperazine, N-dimethylaminoethylpiperidine, 1,2-dimethylimidazol, N-hydroxypropylimidazol, 1-azabicyclo-[2,2,0]-octane, 1,4-diazabicyclo-[2,2,2]octane (DABCO), alkanolamines such as triethanolamine, triisopropanolamine, N-methyl and N-ethyl diethanolamine, dimethylaminoethanol, 2-(N,N'-dimethylaminoethoxy)ethanol, N,N',N-tris-(dialkylaminoalkyl)-hexahydrothiazines such as N,N',N-tris/(dimethylaminopropyl)-s-hexa-hydrothazine, tetraalkylammonium hydroxides such as tetramethyl ammonium hydroxide, alkaline hydroxides such as sodium hydroxide, alkaline alcoholates such as sodium methylate, alkaline salts of long-chain fatty acids, iron(II) chloride, zinc chloride, lead octoate, tin salts such as tin dioctate, tin diethylhexanoate, dibutyl tin dilaurate, dibutyldilauryl tin mercaptide, titanium compounds such as titanium(IV) butylate, organometallic compounds of tin, lead, iron, titanium, bismuth and zirconium, tin oxides and sulphides, and bismuth carboxylates. The polyurethane adhesive obtained as described above, characterized by a free monomer below 0.1% by weight ("free monomer"), does not require hazard labelling, as it is completely safe for the user and contains no substances liable to migrate from the packaging to the food (primary aromatic amines and cyclic esters), even when the packaged product has a long shelf life.

The invention is described in greater detail in the examples below.

The free TDI monomer content is determined by gas chromatography with internal standard according to ASTM D3432.

The reactive NCO group content is determined by back-titration with an excess of n-butylamine acid according to ASTM D2572.

The viscosity is determined by Brookfield rotational viscometer Mod. LVDVII according to ASTM D1084.

### Synthesis of NCO-terminated polyurethane prepolymer

### Example 1

450 Parts of a mixture of toluene diisocyanate isomers, about 80% 2,4 toluene diisocyanate, are added to a 1 lt reaction flask equipped with agitator and reflux condenser, continuously fluxed with nitrogen. The mixture is heated at 40°C and 350 parts of PEG 400 (OH-terminated polyethylene glycol with 2 functional groups and MW 400 g/mol) are dripped into the mixture in 240 minutes under stirring, monitoring the temperature of the reaction mixture and adjusting the polyol addition rate to ensure that it never exceeds 50°C.

At the end of the addition the mixture is heated to 60°C for 2 hours until the %NCO is 18.1%.

The product thus obtained is distilled in a thin-layer evaporator at a pressure of about 0.1 mbar and a temperature of 140°C to remove the unreacted monomer. 630 parts of a transparent colorless liquid with the following characteristics are obtained:

| | |
|---|---|
| %NCO | 10.5% |
| Vx@40°C | 4500 mPas |
| Vx@23°C | 40000 mPas |
| %TDI | 0.04% |

### Example 2

400 Parts of a mixture of toluene diisocyanate isomers, about 80% 2,4-toluene diisocyanate, are added to a 1 lt are added to a 1 lt reaction flask equipped with agitator and reflux condenser, continuously fluxed with nitrogen. The mixture is heated at 40°C using a thermostatic water bath and 130 parts of PPG1000 (OH-terminated polypropylene glycol with 2 functional groups and MW 1000 g/mol) are dripped into the mixture in 60 minutes under stirring, monitoring the temperature of the reaction mixture and adjusting the polyol addition rate to ensure that it never exceeds 50°C. 260 parts of PEG 400 (OH-terminated polyethylene glycol with 2 functional groups and MW 400 g/mol) are then dripped into the mixture in 180 minutes, monitoring the temperature of the reaction mixture and adjusting the polyol addition rate to ensure that it never exceeds 50°C.

At the end of the addition the mixture is heated to 60°C for 2 hours until the %NCO is 16.3%.

The resulting product is distilled in a thin-layer evaporator at a pressure of about 0.1 mbars and a temperature of 140°C to remove the unreacted monomer. 650 Parts of a transparent colourless liquid with the following characteristics are obtained:

| | |
|---|---|
| %NCO | 9.5% |
| Vx@40°C | 4200 mPas |
| Vx@23°C | 40300 mPas |
| %TDI | 0.04% |

### Example 3

The prepolymer of example 1 is mixed with 10% by weight of POLURENE MT100LLV (polyisocyanate HDI trimer manufactured by Sapici Spa).

A colourless transparent liquid with the following characteristics is obtained:

| | |
|---|---|
| %NCO | 11.5% |
| Vx@40°C | 3200 mPas |
| Vx@23°C | 31200 mPas |
| %TDI | 0.04% |
| %HDI | 0.02% |

### Example 4

The prepolymer of example 1 is mixed with 10% by weight of Tolonate XFLO100 (polyisocyanate HDI allophanate manufactured by Vencorex).

A colourless transparent liquid with the following characteristics is obtained:

| | |
|---|---|
| %NCO | 10,2% |
| Vx@40°C | 3000 mPas |
| Vx@23°C | 21200 mPas |
| %TDI | 0.04% |
| %HDI | 0.02% |

### Lamination tests

The lamination tests were effected on a duplex industrial laminating machine for solvent-free adhesives.

The one-component adhesive according to the present invention was heated to 45°C and applied to plastic film weighing 2 g/m². The average lamination speed was 350 m/min.

The plastic films laminated are:
- 20 µm pre-bonded polyester/aluminium (PET-ALU film)
- 50 µm polyethylene (PE film)
- 50 µm cast polypropylene (CPP film)
- 16 µm nylon (OPA film).

### Measurement of laminate bond strength (BS) and heat-sealing strength (HSS)

The bond strength and heat-sealing strength of the laminate were measured on a 15 mm specimen thickness with a Zwick Roell BDO-FB0.5TH dynamometer (traverse speed: 100 mm/min).

Abbreviations: BS stands for Bond Strength; HSS stands for Heat Sealing Strength; A1 stands for adhesive according to EXAMPLE 1; A2 (object of the invention) stands for adhesive (one-component solvent-free with free monomer <0.1% (by weight)) according to EXAMPLE 2; A3 stands for adhesive according to EXAMPLE 3; A4 stands for adhesive according to EXAMPLE 4; A5 stands for Polurene FP133B/FP412S, a conventional adhesive (two-component solvent-free with free monomer >1% (by weight)), used as comparative example because two-component technology is the most widely used on an industrial scale and constitutes the state of the art in lamination with solvent-free adhesives of film/film and film/aluminium for flexible packaging; Ind stands for "non-delaminable".

**TABLE 1**

| Crosslinking time | After 1 day (40°C) | After 4 days (Tᵣₒₒₘ) | After 7 days (Tᵣₒₒₘ) | |
|---|---|---|---|---|
| Adhesive | BS | BS | BS | HSS |
| | Laminate: PET-ALU/PE | | | |
| **A1** | 1.3 | 1.5 | 1.5 | 10.2 |
| **A2** | 4.3 | 3.8 | 3.8 | 51 |
| **A3** | 1.5 | 1.7 | 1.8 | 13.1 |
| **A4** | 1.3 | 1.4 | 1.5 | 12.2 |
| **A5** | 3.6 | 4.1 | 4.1 | 40.2 |

| | Laminate: ALU-PET/PE | | | |
|---|---|---|---|---|
| **A1** | Ind (PE stretch) | Ind (PE stretch) | Ind (PE stretch) | 49.5 |
| **A2** | Ind (PE stretch) | Ind (PE stretch) | Ind (PE stretch) | 52 |
| **A3** | Ind (PE stretch) | Ind (PE stretch) | Ind (PE stretch) | 49.0 |
| **A4** | 3.7 | 3.9 | 3.9 | 49.9 |
| **A5** | Ind (PE stretch) | Ind (PE stretch) | Ind (PE stretch) | 46 |

| | Laminate: PET-ALU/CPP | | | |
|---|---|---|---|---|
| **A1** | 1.3 | 1.4 | 1.2 | 19.9 |
| **A2** | 2.2 | 2.3 | 2.3 | 24.1 |
| **A3** | 1.2 | 1.3 | 1.3 | 20.1 |
| **A4** | 1.3 | 1.4 | 1.4 | 22.3 |
| **A5** | 2.9 | 3.4 | 3.8 | 25.4 |

| | Laminate: ALU-PET/CPP | | | |
|---|---|---|---|---|
| **A1** | Ind (PE stretch) | Ind (PE stretch) | Ind (PE stretch) | 40.5 |
| **A2** | Ind (PE stretch) | Ind (PE stretch) | Ind (PE stretch) | 45.5 |
| **A3** | Ind (PE stretch) | Ind (PE stretch) | Ind (PE stretch) | 45.1 |
| **A4** | 1.0 | 1.5 | 1.7 | 39.8 |
| **A5** | Ind (PE stretch) | Ind (PE stretch) | Ind (PE stretch) | 34.6 |

Results are expressed in N/15 mm.

### Primary aromatic amine (PAA) migration test

Abbreviations: A1 stands for adhesive according to EXAMPLE 1; A2 (object of the invention) stands for adhesive (one-component solvent-free with free monomer <0.1% (by weight)), according to EXAMPLE 2; A3 stands for adhesive according to EXAMPLE 3; A4 stands for adhesive according to EXAMPLE 4; A5 stands for Polurene FP133B/FP412S, a conventional adhesive (two-component solvent-free with free monomer >1% (by weight)).

Extraction conditions: the OPA/PE laminates were closed to form an envelope with 3% acetic acid simulant (100 ml to 400 cm² of laminate area); the primary aromatic amines were determined according to the method described in BGVV Recommendation XXVIII (µg of aniline/100 ml of simulant) under the extraction condition, specified by the method, of 2 h at 70°C.

As required by Regulation 10/2011/EC, laminates were also tested for extraction time/temperature conditionof 10 days at 60°C to simulate a laminate shelf life exceeding months.

According to Recommendation BGVV XXVIII, the laminate is PAA-free if the measured value is less than 0.2 µg of aniline hydrochloride/100 ml of simulant (2 ppb).

**TABLE 2**

| **MIGRATED PAA CONCENTRATION (ppb)** | | | | | | | | |
|---|---|---|---|---|---|---|---|---|
| | t/T conditions: | | t/T conditions: | | | | | |
| | 2 h at 70°C | | 10 days at 60°C | | | | | |
| Simulant | 3% Acetic acid | | 3% Acetic acid | | Water | | 10% Ethanol | |
| Crosslinking time | A1-2-3-4 | A5 | A1-2-3-4 | A5 | A1-2-3-4 | A5 | A1-2-3-4 | A5 |
| 1 day | <1 | 258 | | | | | | |
| 4 days | <1 | 18.2 | | | | | | |
| 7 days | <1 | 8.59 | | | | | | |
| 11 days | <1 | <2 | <1 | 60.5 | <1 | 51.4 | <1 | 59.4 |

## Claims

1. A solvent-free 1K reactive lamination polyurethane adhesive comprising a NCO terminated prepolymer having reactive isocyanate groups, free diisocyanate monomer content lower than 0.1% by weight and **characterized by** viscosity at 40°C ranging from 800 mPas to 20000 mPas, said polyurethane adhesive being obtained by a process which comprises:
A. reaction between a diisocyanate monomer and a polyols mixture consisting of 50-90% w/w polyethylene glycols with molecular weight < 600 g/mol and from 10 to50% w/w of polypropylene glycols with molecular weight <5000 g/molin a NCO/OH ratio higher than 2.5, optionally in the presence of a catalyst and optionally in the presence of an acidic compound, to obtain an NCO terminated prepolymer;
B. subjecting the NCO terminated prepolymer obtained in step A to one or more stripping steps using a series of one or more thin layer evaporators and molecular evaporators.

2. A polyurethane adhesive according to claim 1 wherein the diisocyanate monomers are selected from toluene diisocyanate (TDI) and isomeric mixtures thereof, diphenyl methane diisocyanate (MDI) and isomeric mixtures thereof, 1,5-naphthalene diisocyanate (NDI), tetramethyl xylylene diisocyanate (TMXDI), isophorone diisocyanate (IPDI) and isomeric mixtures thereof, 1,6-hexane diisocyanate (HDI), xylylene diisocyanate (XDI), methane dicyclohexyl diisocyanate and isomeric mixtures thereof.

3. A polyurethane adhesive according to claim 1 or 2 wherein the diisocyanate monomers are aromatic diisocyanate monomers, preferably isomers of toluene diisocyanate (TDI), 2,4'- and 4,4'-diphenyl methane diisocyanate (MDI), 1,5-naphthalene diisocyanate (NDI).

4. A polyurethane adhesive according to any one of claims 1-3 wherein the prepolymer has the following characteristics:
%NCO> 8%
Vx@40°C< 10000 mPas
% free diisocyanate monomer <0.1% w/w.

## Patentansprüche

1. Lösungsmittelfreier einkomponentiger reaktiver Laminierungspolyurethankleber, umfassend ein NCO-terminiertes Prepolymer mit reaktiven Isocyanatgruppen, einem Gehalt an freiem Diisocyanatmonomer von weniger als 0,1 Gew.-% und **gekennzeichnet durch** eine Viskosität bei 40 °C im Bereich von 800 mPas bis 20 000 mPas, wobei der Polyurethankleber durch ein Verfahren erhalten wird, das Folgendes umfasst:
A. Reaktion zwischen einem Diisocyanatmonomer und einem Gemisch von Polyolen, das aus 50-90 Gew.-% Polyethylenglycolen mit einem Molekulargewicht von < 600 g/mol und 10 bis 50 Gew.-% Polypropylenglycolen mit einem Molekulargewicht von < 5000 g/mol in einem NCO/OH-Verhältnis von mehr als 2,5 besteht, gegebenenfalls in Gegenwart eines Katalysators und gegebenenfalls in Gegenwart einer sauren Verbindung, wobei man ein NCO-terminiertes Prepolymer erhält;
B. Durchführen von einem oder mehreren Abziehschritten mit dem in Schritt A erhaltenen NCO-terminierten Prepolymer, wobei man eine Reihe von einem oder mehreren Dünnschichtverdampfern und Molekularverdampfern verwendet.

2. Polyurethankleber gemäß Anspruch 1, wobei die Diisocyanatmonomeren aus Toluoldiisocyanat (TDI) und isomeren Gemischen davon, Diphenylmethandiisocyanat (MDI) und isomeren Gemischen davon, 1,5-Naphthalindiisocyanat (NDI), Tetramethylxylylendiisocyanat (TMXDI), Isophorondiisocyanat (IPDI) und isomeren Gemischen davon, 1,6-Hexadiisocyanat (HDI), Xylylendiisocyanat (XDI), Methandicyclohexyldiisocyanat und isomeren Gemischen davon ausgewählt sind.

3. Polyurethankleber gemäß Anspruch 1 oder 2, wobei die Diisocyanatmonomere aromatische Diisocyanatmonomere, vorzugsweise Isomere von Toluoldiisocyanat (TDI), 2,4'- und 4,4'-Diphenylmethandiisocyanat (MDI), 1,5-Naphthalindiisocyanat (NDI), sind.

4. Polyurethankleber gemäß einem der Ansprüche 1 bis 3, wobei das Prepolymer die folgenden Merkmale aufweist:
% NCO > 8%;
Vx bei 40 °C < 10 000 mPas;
% freies Diisocyanatmonomer < 0,1 Gew.-%.

## Revendications

1. Adhésif de stratification polyuréthane réactif 1K sans solvant, comprenant un prépolymère à terminaison NCO ayant des groupes isocyanates réactifs, une teneur en monomère diisocyanate libre inférieure à 0,1 % en poids et **caractérisé par** une viscosité à 40 °C allant de 800 mPas à 20 000 mPas, ledit adhésif polyuréthane étant obtenu par un procédé qui comprend :
A. la réaction entre un monomère diisocyanate et un mélange de polyols constitué de 50 à 90 % en poids/poids de polyéthylène glycols ayant un poids moléculaire < 600 g/mole et de 10 à 50 % en poids/poids de polypropylène glycols ayant un poids moléculaire < 5 000 g/mole dans un rapport de NCO/OH supérieur à 2,5, éventuellement en présence d'un catalyseur et éventuellement en présence d'un composé acide, pour obtenir un prépolymère à terminaison NCO ;
B. la soumission du prépolymère à terminaison NCO obtenu à l'étape A à une ou plusieurs étapes d'extraction au moyen d'une série d'un ou plusieurs évaporateurs à couche mince et évaporateurs moléculaires.

2. Adhésif polyuréthane selon la revendication 1, dans lequel les monomères diisocyanates sont choisis parmi le diisocyanate de toluène (TDI) et ses mélanges isomériques, le diisocyanate de diphényl méthane (MDI) et ses mélanges isomériques, le diisocyanate de 1,5-naphtalène (NDI), le diisocyanate de tétraméthyl xylylène. (TMXDI), le diisocyanate d'isophorone (IPDI) et ses mélanges isomériques, le diisocyanate de 1,6-hexane (HDI), le diisocyanate de xylylène (XDI), le dicyclohexyl diisocyanate de méthane et ses mélanges isomériques.

3. Adhésif polyuréthane selon la revendication 1 ou 2, dans lequel les monomères diisocyanates sont des monomères diisocyanates aromatiques, de préférence des isomères du diisocyanate de toluène (TDI), du diisocyanate de 2,4'- et 4,4'-diphényl méthane (MDI), du diisocyanate de 1,5-naphtalène (NDI).

4. Adhésif polyuréthane selon l'une quelconque des revendications 1 à 3, dans lequel le prépolymère a les caractéristiques suivantes :
% de NCO > 8 %
Vx à 40 °C < 10 000 mPas
% de monomère diisocyanate libre < 0,1 % poids/poids.
